(19) Europäisches Patentamt
European Patent Office
Office européen des brevets

(11) Veröffentlichungsnummer: **0 342 570**
**A1**

(12) **EUROPÄISCHE PATENTANMELDUNG**

(21) Anmeldenummer: 89108703.3

(22) Anmeldetag: 16.05.89

(51) Int. Cl.⁴: **B60B 35/14** , **F16H 1/44** , **B61C 9/44**

(30) Priorität: 20.05.88 DE 3817211

(43) Veröffentlichungstag der Anmeldung:
23.11.89 Patentblatt 89/47

(84) Benannte Vertragsstaaten:
AT BE CH DE ES FR GB IT LI SE

(71) Anmelder: **Clouth Gummiwerke AG**
**Niehler Strasse 92 - 116**
**D-5000 Köln 60(DE)**

(72) Erfinder: **Krettek, Otmar, Prof. Dr. RWTH**
**Aachen Anal. Verfah**
**Seffnter Weg 8**
**D-5100 Aachen(DE)**
Erfinder: **Nicolin, Johannes, Dr.-Ing.**
**Kohlweg 2**
**D-5100 Aachen(DE)**

(74) Vertreter: **Happe, Otto, Dipl.-Ing.**
**Isselburger Strasse 12**
**D-5000 Köln 60(DE)**

(54) **Radsatz für Schienenfahrzeuge.**

(57) Zur Erzielung einer großen Laufruhe auch bei hohen Geschwindigkeiten sind Radsätze bekannt, deren Räder (1 ,1'; 21, 21') drehfest an zwei koaxialen Wellen (3,3'; 23,23') befestigt sind, die über eine drehelastische, dämpfende Kupplung (11,31) derart miteinander verbunden sind, daß sich die Räder (1,1'; 21,21') elastisch gegeneinander verdrehen können.

Damit diese Radsätze ohne Störung der elastischen Kupplung auch antreibbar sind, sind die Wellen (3,3'; 23,23') zusätzlich über ein antreibbares Differentialgetriebe (6,26) miteinander gekuppelt.

Fig.1

### Radsatz für Schienenfahrzeuge

Die Erfindung geht aus von einem Radsatz für Schienenfahr zeuge, dessen Räder drehfest an zwei koaxialen Wellen befestigt sind, die über eine drehelastische dämpfende Kupplung derart miteinander verbunden sind, daß sich die Räder elastisch gegeneinander verdrehen können.

Radsätze dieser Art sind bekannt aus der DE-OS 33 41 950 Diese Radsätze werden für Schienenfahrzeuge mit sehr hohen Fahrgeschwindigkeiten verwendet, weil sie auch bei Spurkranzrädern mit stärker geneigten Laufflächen bei hohen Geschwindigkeiten einen ruhigen Lauf des damit ausgerüsteten Fahrzeugs bewirken.

Die insbesondere torsionselastische und dämpfende Kupplung der Räder und deren Wellen bewirkt, daß die Masse eines Radsatzes in zwei halb so große Massen geteilt ist, wodurch die aus Querbeschleunigung resultierenden Kräfte verkleinert s ind und Störungen aufgrund verworfener oder unebener Schienen nicht von einem Rad auf das andere Rad eines Radsatzes übertragen werden. Ferner wird die Wellenlänge des Sinuslaufes durch den Wegausgleich zwischen den Rädern einer Achse vergrößert. Dies hat auch einen geringeren Verschleiß, insbesondere an den Spurkränzen, zur Folge.

Aus der DE-OS 23 50 020 ist ein Drehgestell bekannt, bei dem jedes Räderpaar drei Achslager aufweist, wobei die äußeren Achslager außerhalb der Räder liegen und die Radwellen im mittleren Lager unterbrochen und über eine Drehmomente übertragende elastische Kupplung miteinander verbunden sind. Diese Radsätze können nur in hierfür eigens geschaffene Drehgestelle eingesetzt werden. Die elastische Kupplung wird von zwei koaxialen Hülsen, die über eine einvulkanisierte Gummizwischenlage mit einer die beiden Hülsen konzentrisch umgebenden Hülse verbunden sind, gebildet. Diese Kupplung hat nur eine geringe Torsionselastizität, auch ist die dämpfende Wirkung aufgrund des geringen Volumens des gummielastischen Körpers gering. Diese elastische Kupplung ist wegen ihrer geringen Elastizität zur Erzielung einer Laufberuhigung der Räder von Schienenfahrzeugen nahezu wirkungslos.

Aus der DE-OS 26 14 166 und der DE-OS 28 48 398 sind Radsätze bekannt, bei denen die Räder auf einer gemeinsamen Achse gelagert sind und über zwei koaxiale hohle Wellen und einer zwischen diesen Wellen angeordneten Kupplung miteinander verbunden sind. Die Kupplung ist kraftschlüssig und steuerbar und wird insbesondere von einer elektromagnetischen Reib-Kupplung gebildet. Zur Erhöhung oder Verringerung der Differenzdrehzahl der beiden Räder ist es auch bekannt, die koaxialen Wellen der Räder über ein steuerbares Differentialgetriebe miteinander zu verbinden.

Der vorliegenden Erfindung liegt die Aufgabe zugrunde, einen Radsatz nach dem Oberbegriff des Patentanspruchs 1 antreibbar auszubilden, wobei der Antrieb die elastische und dämpfende Kupplung der Räder nicht stören soll.

Diese Aufgabe wird erfindungsgemäß dadurch gelöst, daß die torsionselastisch und dämpfend gekuppelten Wellen zusätzlich über ein antreibbares Differentialgetriebe gekuppelt sind. Die von dem Ritzel einer Antriebsachse angetriebene Trommel des Differentialgetriebes ist drehbar auf mindestens einer der Wellen gelagert und verteilt die Antriebskräfte über die Ausgleichsräder auf die fest mit den Radwellen verbundenen Tellerräder des Differentialgetriebes. Dabei bleibt die elastische Kupplung der Räder erhalten und die Drehzahldifferenzen werden von der elastischen Kupplung aufgenommen und durch verstärkten Schlupf eines der beiden Räder ausgeglichen.

Für Schienenfahrzeuge, die auch Kurvenbögen mit kleinem Kurvenradius, zum Beispiel kleiner als 20 Meter, durchfahren müssen, insbesondere Straßenbahnen, ist es vorteilhaft, die elastische Kupplung mittels einer lösbaren Kupplung außer Wirkung zu setzen, wenn eine derartige enge Kurve durchfahren werden soll. Dementsprechend ist zwischen der elastischen Kupplung und einem Tellerrad des Differentialgetriebes eine lösbare Kupplung angeordnet, die in Abhängigkeit vom Fahrzustand des Schienenfahrzeuges oder von einem an der Strecke installierten Signalgeber geschaltet werden kann.

Weitere Merkmale der Erfindung ergeben sich aus den Unteransprüchen 2 bis 8.

In der folgenden Beschreibung wird die Erfindung unter Bezugnahme auf zwei Ausführungsbeispiele näher erläutert. Die Zeichnungen zeigen in

Fig. 1 eine Ansicht eines Radsatzes nach der Erfindung mit auf einer gemeinsamen Achse gelagerten antreibbaren Rädern, teilweise im Längsschnitt,

Fig. 2 eine Längsschnittansicht eines Radsatzes entsprechend Fig. 1 mit lösbarer Kupplung.

Fig. 3 eine Längsschnittansicht einer weiteren Ausführungsform eines Radsatzes nach der Erfindung.

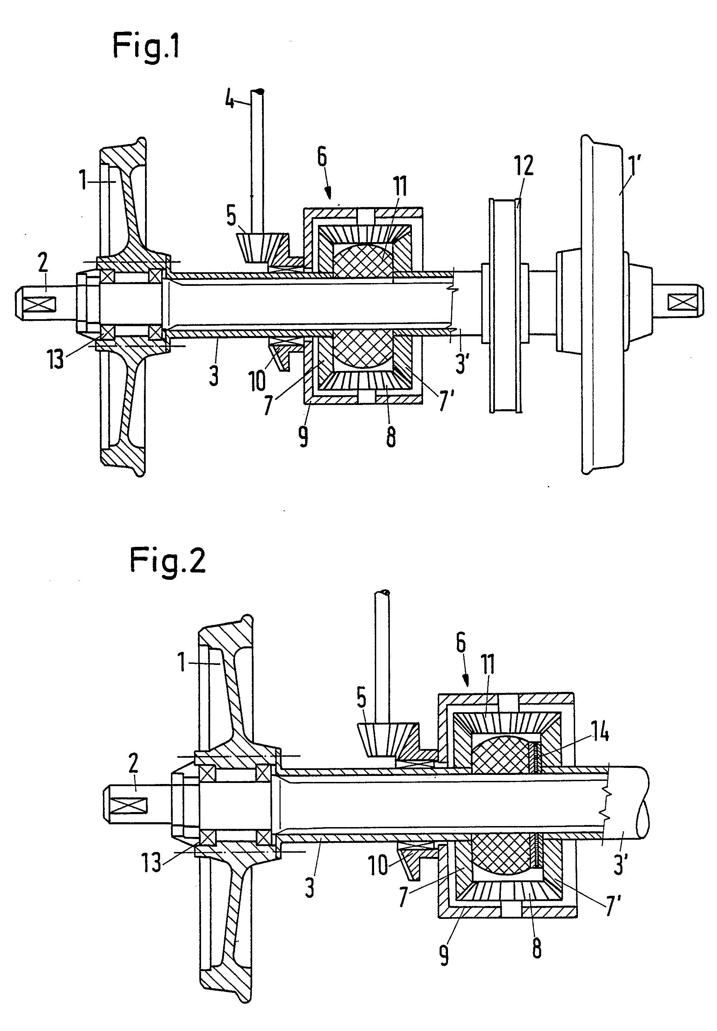

Der in Fig. 1 dargestellte Radsatz weist zwei Räder 1 und 1′ auf, die über Wälzlager 13 drehbar auf einer gemeinsamen Achse 2 gelagert sind. Die Räder 1 und 1′ sind über die hohlen Wellen 3 und 3′ und einer elastischen Kupplung 11 derart miteinander verbunden, daß sich die Räder 1,1′ beispielsweise bis zu 20° elastisch gegeneinander verdrehen können. Diese torsionselastische und dämpfende Verbindung der beiden Räder 1,1' bewirkt einen ruhigen Lauf des mit diesen Radsätzen ausgerüsteten Fahrzeuges bei hohen Geschwindigkeiten.

Die Räder 1 und 1' sind von einer Antriebswelle 4 antreibbar, deren Ritzel 5 mit einem Antriebsrad 10 kämmt, das an der Trommel 9 eines Differentialgetriebes 6 befestigt ist. Die Tellerräder 7,7' des Differentialgetriebes 6 sind an den einander zugewandten Enden der hohlen Wellen 3,3' drehfest befestigt und über die elastische Kupplung 11, die von einem ringförmigen gummielastischen Körper gebildet wird, verbunden. Auf diese Weise überbrückt das Differentialgetriebe 6 die elastische Kupplung 11.Die Trommel 9 des Differentialgetriebes 6 mit dem daran befestigten Antriebsrad 10 ist drehbar auf der hohlen Welle 3 oder auf beiden hohlen Wellen 3,3' gelagert. Die hohle Welle 3' ist mit einer Bremsscheibe 12 versehen. Die Achse 2 ist durch den Innenraum des ringförmigen, elastischen Körpers 11 hindurchgeführt, der die drehfest auf den Hohlwellen 3,3' sitzenden Tellerräder 7,7' miteinander verbindet.

Die Antriebswelle 4 treibt über das Ritzel 5 das als Kegelrad ausgebildete Antriebsrad 10 an, welches drehbar auf der hohlen Welle 3 gelagert und mit der Trommel 9 des Differentialgetriebes 6 verbunden ist. Die Welle 3 ist einmal über die drehelastische Kupplung 11 und zum anderen über die Tellerräder 7,7' und die Ausgleichsräder 8 des Differentialgetriebes 6 mit der Welle 31 verbunden.

Bei Geradeausfahrt dreht sich die Trommel 9 um die Achse des Radsatzes und nimmt über die stillstehenden Ausgleichsräder 7,7' die hohlen Wellen 3 und 3' mit. Die Räder 1 und 1' drehen sich dabei mit gleicher Geschwindigkeit.

In Kurven dreht das kurvenäußere Rad schneller als das kurveninnere Rad. Die Hohlwellen 3 und 3' drehen mit unterschiedlichen Drehzahlen. Die Ausgleichsräder 8 drehen sich dabei um ihre eigene Achsen mit dem Effekt, daß sie das mit dem kurveninneren Rad korrespondierende Tellerrad 7 bzw. 7' zurückhalten und das gegenüberliegende Tellerrad 7' bzw. 7, welches mit dem kurvenäußeren Rad korrespondiert, schneller vorwärts schieben. Diese Drehzahldifferenz spielt sich innerhalb der Torsionselastizität der elastischen Kupplung 11 ab und wird bei weiterer Fahrt durch einen etwas verstärkten Schlupf eines der beiden Räder 1 und 1' ausgeglichen.

Bei dem Ausführungsbeispiel nach Fig. 2 ist zwischen der drehelastischen Kupplung 11 und dem Tellerrad 7' des Differentialgetriebes 6 eine lösbare Kupplung 14 angeordnet, die bei größeren Drehzahldifferenzen zwischen den Rädern 1 und 1' die elastische Kupplung der Räder 1 und 1' aufheben. Insbesondere vor Durchfahren enger Kurven, zum Beispiel einer Straßenbahn, werden die elastisch miteinander gekuppelten Räder 1 und 1' oder Wellen 3,3' voneinander getrennt, so daß sie nur noch über das Differentialgetriebe 6 miteinander in Verbindung bleiben.

Die lösbare Kupplung 14 kann in Abhängigkeit von der Fahrgeschwindigkeit zum Beispiel über ein Tachometer geschaltet werden oder über eine Schleife oder einen entsprechenden Signalgeber, der vor einer Kurve mit kleinem Radius, beispielsweise unter 20 Meter, installiert ist.

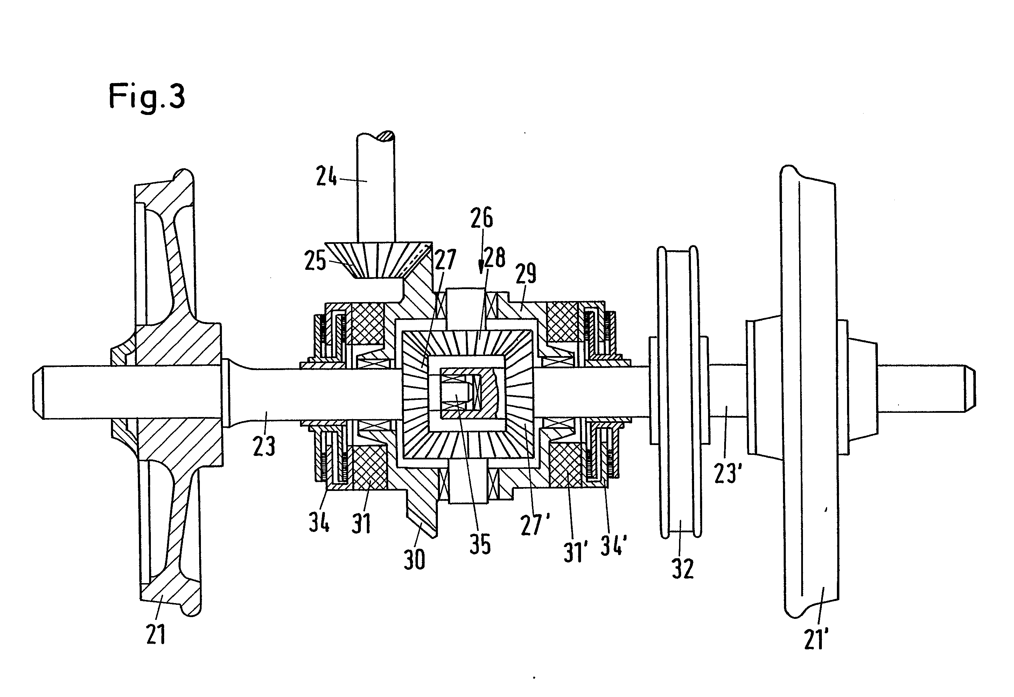

Bei dem Ausführungsbeispiel nach Fig. 3 sind die Wellen 23 und 23' als Vollwellen ausgebildet, und die Welle 23 ist über einen Wellenzapfen 35 in einer koaxialen Ausnehmung der Welle 23' gelagert. An der Welle 23 ist das Tellerrad 27 und an der Welle 23' ist das Tellerrad 27' des Differentialgetriebes 26 befestigt. Der Antrieb erfolgt über eine Antriebswelle 24 und ein Antriebsritzel 25, das mit dem Kegelrad 30 des Differentialgetriebes 26 kämmt. Die drehelastische Kupplung der beiden Wellen 23 und 23' erfolgt über mindestens eine aus einem gummielastischen Körper bestehende drehelastische Kupplung 31 bzw. 31'. Bei dem dargestellten Ausführungsbeispiel ist zu beiden Seiten der Trommel 29 des Differentialgetriebes 26 eine drehelastische Kupplung 31 und 31' angeordnet, die über schaltbare Kupplungen 34 und 34' mit den Wellen 23 und 23' verbindbar sind. Auch bei diesem Ausführungsbeispiel sind die Räder 21 und 21' drehelastisch miteinander gekuppelt und über das Differentialgetriebe 26 antreibbar. Die drehelastische Kupplung der Räder 21 und 21' kann mittels der Schaltkupplungen 34 und 34', zum Beispiel beim Durchfahren enger Kurven, aufgehoben werden.

Die drehelastischen Kupplungen 11, 31 und 31' gestatten einen Verdrehwinkel von +/- 30°. Die Torsionssteifigkeit liegt vorzugsweise zwischen 500 und 200.000 Newtonmeter pro Radiant.

Bezugszeichenliste :

    1 Rad
    1' Rad
    2 Achse
    3 Hohlwelle
    3' Hohlwelle
    4 Antriebswelle
    5 Ritzel
    6 Differentialgetriebe
    7 Tellerrad
    7' Tellerrad
    8 Ausgleichsrad
    9 Trommel
    10 Antriebsrad

11 elastische Kupplung

12 Bremsscheibe

13 Wälzlager

14 lösbare Kupplung

21 Rad

21' Rad

23 Welle

23' Welle

24 Antriebswelle

25 Antriebsritzel

26 Ausgleichsgetriebe

27 Tellerrad

27' Tellerrad

28 Ausgleichsrad

29 Trommel

30 Antriebsrad

31 elastische Kupplung

31' elastische Kupplung

32 Bremsscheibe

34 Schaltkupplung

34' Schaltkupplung

35 Achszapfen

**Ansprüche**

1. Radsatz für Schienenfahrzeuge, dessen Räder (1,1'; 21, 21') drehfest an zwei koaxialen Wellen (3,3'; 23,23') befestigt sind, die über eine drehelastische, dämpfende Kupplung (11 ,31) derart miteinander verbunden sind, daß sich die Räder (1,1'; 21 ,21') elastisch gegeneinander verdrehen können,
dadurch gekennzeichnet, daß die Wellen (3,3'; 23,23') zusätzlich über ein antreibbares Differentialgetriebe (6,26) miteinander gekuppelt sind.

2. Radsatz nach Anspruch 1, dadurch gekennzeichnet, daß die Tellerräder (7,7') des Differentialgetriebes (6) drehfest auf den Wellen (3,3') befestigt und über die elastische Kupplung (11) miteinander verbunden sind.

3. Radsatz nach Anspruch 2, dadurch gekennzeichnet, daß zwischen einem der Tellerräder (7 oder 7') des Differentialgetriebes (6) und der elastischen Kupplung (11) eine schaltbare Kupplung (14) angeordnet ist.

4. Radsatz nach einem der Ansprüche 1 bis 3, dessen Räder (1,1') auf einer gemeinsamen Achse (2) gelagert und über zwei hohle Wellen (3,3') und der elastischen Kupplung (11) miteinander verbunden sind, dadurch gekennzeichnet, daß die elastische Kupplung (11) von einem ringförmigen, die beiden Tellerräder (7,7') des Differentialgetriebes (6) verbindenden gummielastischen Körper gebildet ist, durch den die Achse (2) hindurchgeführt ist.

5. Radsatz nach Anspruch 1 oder 2, dadurch gekennzeichnet, daß die über ein Differentialgetriebe (26) miteinander verbundenen Wellen (23,23') über die Trommel (29) des Differentialgetriebes (26) und mindestens einer einen ringförmigen gummielastischen Körper aufweisenden drehelastischen Kupplung (31,31') elastisch miteinander gekuppelt sind.

6. Radsatz nach Anspruch 5, dadurch gekennzeichnet, daß die Trommel (29) des Differentialgetriebes (26) über je eine Schaltkupplung (34,34') von den beiden Wellen (23,23') abkuppelbar ist.

7. Radsatz nach Anspruch 5 oder 6, dadurch gekennzeichnet, daß die Trommel (29) des Differentialgetriebes (26) über je eine drehelastische Kupplung (31 ,31') und je eine Schaltkupplung (34,34') mit den Wellen (23,23') verbindbar ist.

8. Radsatz nach einem der Ansprüche 5 bis 7, dadurch gekennzeichnet, daß zwischen den Tellerrädern (27,27') der beiden Wellen (23,23') eine Welle (23) über einen Wellenzapfen (35) in einer koaxialen Ausnehmung der anderen Welle (23') gelagert ist.

# Fig.1

# Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 569 806 (POISSON) <br> * Seite 2, Zeile 34 - Seite 3, Zeile 23; Seite 4, Zeile 26 - Seite 5, Zeile 3; Figuren 1,3 * <br> --- | 1,2,4,8 | B 60 B 35/14 <br> F 16 H 1/44 <br> B 61 C 9/44 |
| Y | GB-A- 261 157 (ALGRAIN) <br> * Seite 4, Zeilen 15-39; Figur 1 * <br> --- | 1,2,4,8 | |
| A | GB-A- 456 476 (BUGATTI) <br> * Seite 3, Zeilen 79-104; Figuren 2,3 * <br> --- | 1 | |
| A | EP-A-0 043 340 (SIEMENS) <br> * Seite 4, Zeile 8 - Seite 6, Zeile 3; Figur 2 * <br> ----- | 1 | |

RECHERCHIERTE
SACHGEBIETE (Int. Cl.4)

B 60 B
B 61 C
B 60 K
F 16 H

Der vorliegende Recherchenbericht wurde für alle Patentansprüche erstellt

| Recherchenort | Abschlußdatum der Recherche | Prüfer |
|---|---|---|
| DEN HAAG | 23-08-1989 | AYITER I. |